# EUROPEAN PATENT SPECIFICATION

(11) **EP 3 540 253 B1**
(45) Date of publication and mention of the grant of the patent: **19.01.2022**
(21) Application number: 17870355.9
(22) Date of filing: 26.10.2017
(51) Int. Cl.: F16C 33/66, F16C 19/16, F16N 7/38, F16C 33/58, F16N 29/00

(54) **BEARING APPARATUS**
LAGERVORRICHTUNG
DISPOSITIF DE PALIER

(30) Priority: 10.11.2016 JP 2016219570
(43) Date of publication of application: 18.09.2019
(73) Proprietor: NTN Corporation, Osaka-shi, Osaka 550-0003 (JP)
(72) Inventor: NASU, Keisuke, Kuwana-shi Mie 511-8678 (JP)
(74) Representative: Bockhorni & Brüntjen Partnerschaft Patentanwälte mbB
(86) International application number: PCT/JP2017/038742
(87) International publication number: WO 2018/088227

(56) References cited:
- DE-A1-102015 111 834
- JP-A- 2009 097 553
- JP-A- 2010 091 067
- JP-A- 2011 106 493
- JP-A- 2013 076 428
- JP-A- 2014 031 810
- JP-A- 2016 023 757

## Description

### TECHNICAL FIELD

The present invention relates to a bearing apparatus, particularly, a bearing apparatus including an angular contact ball bearing and a supply portion configured to supply lubricating oil to the angular contact ball bearing.

### BACKGROUND ART

A bearing apparatus has been known in which an oil supply unit for supplying lubricating oil into a rolling bearing is incorporated in the rolling bearing. A bearing apparatus disclosed in Japanese Patent Laying-Open No. 2014-37879 (Patent Literature 1) includes a lubricating oil tank and a pump each disposed in a spacer adjacent to a bearing. In this bearing apparatus, lubricating oil can be stably supplied to the bearing for a long period of time by operating the pump intermittently. JP 2013 076428 A (NTN TOYO BEARING CO LTD) (Patent Literature 2) discloses a bearing apparatus as described in the preamble of Claim 1. JP 2009 097553 A (NTN TOYO BEARING CO LTD) (Patent Literature 3) and JP 2010 091067 A (NTN TOYO BEARING CO LTD) (Patent Literature 4) show further examples of related prior art. JP 2010 091 067 A discloses a bearing apparatus according to the preamble of claim 1.

### CITATION LIST

### PATENT LITERATURE

PTL 1: Japanese Patent Laying-Open No. 2014-37879
PTL 2: JP 2013 076428 A (NTN TOYO BEARING CO LTD)
PTL 3: JP 2009 097553 A (NTN TOYO BEARING CO LTD)
PTL 4: JP 2010 091067 A (NTN TOYO BEARING CO LTD)

### SUMMARY OF INVENTION

### TECHNICAL PROBLEM

Meanwhile, a bearing apparatus having a longer life than that of a conventional bearing apparatus has been required.

The present invention has been made to solve the foregoing problem. A main object of the present invention is to provide a bearing apparatus having a longer life than that of a conventional bearing apparatus.

### SOLUTION TO PROBLEM

A bearing apparatus according to the present invention includes: an angular contact ball bearing including a fixed ring, a rotation ring, a plurality of rolling elements, and a cage, the fixed ring having a first raceway surface, the rotation ring being disposed to be separated from the first raceway surface in a radial direction of the fixed ring, the rotation ring having a second raceway surface, each of the plurality of rolling elements being disposed between the first raceway surface and the second raceway surface to have an contact angle with respect to each of the first raceway surface and the second raceway surface, the cage being configured to hold the plurality of rolling elements; a fixed ring spacer adjacent to the fixed ring in an axial direction of the angular contact ball bearing; a rotation ring spacer adjacent to the rotation ring in the axial direction, the rotation ring spacer being disposed to be separated from the fixed ring spacer in the radial direction; and a supply portion disposed between the fixed ring spacer and the rotation ring spacer, the supply portion being configured to supply lubricating oil to a clearance between the cage and the fixed ring. The supply portion includes a nozzle having a discharge port disposed in the clearance, the discharge port being configured to discharge the lubricating oil. The fixed ring is provided with a groove portion formed adjacent to the first raceway surface at a side, at which the contact angle is formed. In the axial direction, the groove portion is along a circumferential direction of the fixed ring. The one end of nozzle insertion recess is formed inside the groove portion, and the discharge port is disposed inside the groove portion.

### ADVANTAGEOUS EFFECTS OF INVENTION

According to the present invention, there can be provided a bearing apparatus having a longer life than that of a conventional bearing apparatus.

### BRIEF DESCRIPTION OF DRAWINGS

Fig. 1 is a schematic cross sectional view showing an exemplary bearing apparatus according to a first embodiment, which is not part of the claimed invention.
Fig. 2 is a schematic cross sectional view along a line segment II-II in Fig. 1.
Fig. 3 is a schematic cross sectional view showing a modification of the bearing apparatus according to the first embodiment, which is not part of the claimed invention.
Fig. 4 is a schematic cross sectional view showing the modification of the bearing apparatus according to the first embodiment, which is not part of the claimed invention.
Fig. 5 is a schematic cross sectional view showing the modification of the bearing apparatus according to the first embodiment, which is not part of the claimed invention.
Fig. 6 is a schematic cross sectional view showing the modification of the bearing apparatus according to the first embodiment, which is not part of the claimed invention.
Fig. 7 is a schematic cross sectional view showing a bearing apparatus according to a second embodiment.
Fig. 8 is a perspective cross sectional view of an outer ring shown in Fig. 7. Fig. 9 is a schematic cross sectional view showing a bearing apparatus according to a third embodiment.
Fig. 10 is a perspective cross sectional view of an outer ring shown in Fig. 9.

### DESCRIPTION OF EMBODIMENTS

The following describes embodiments of the present invention with reference to figures. It should be noted that in the below-described figures, the same or corresponding portions are given the same reference characters and are not described repeatedly.

### (First Embodiment)

### <Configuration of Bearing Apparatus>

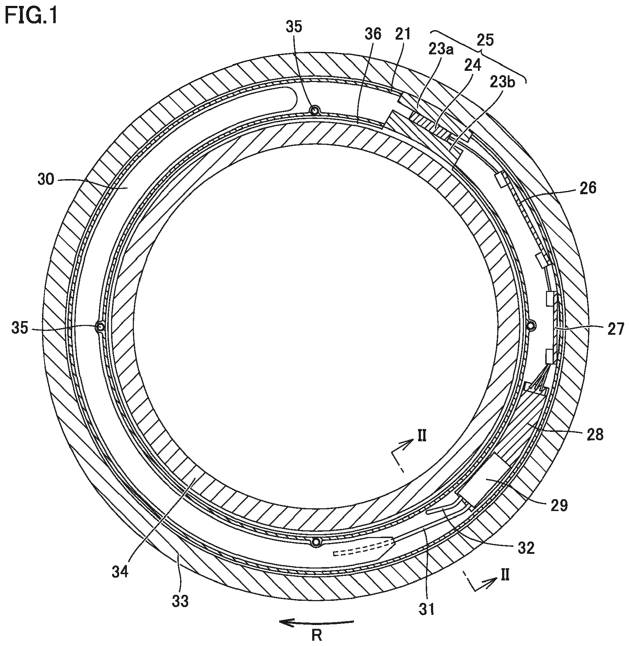

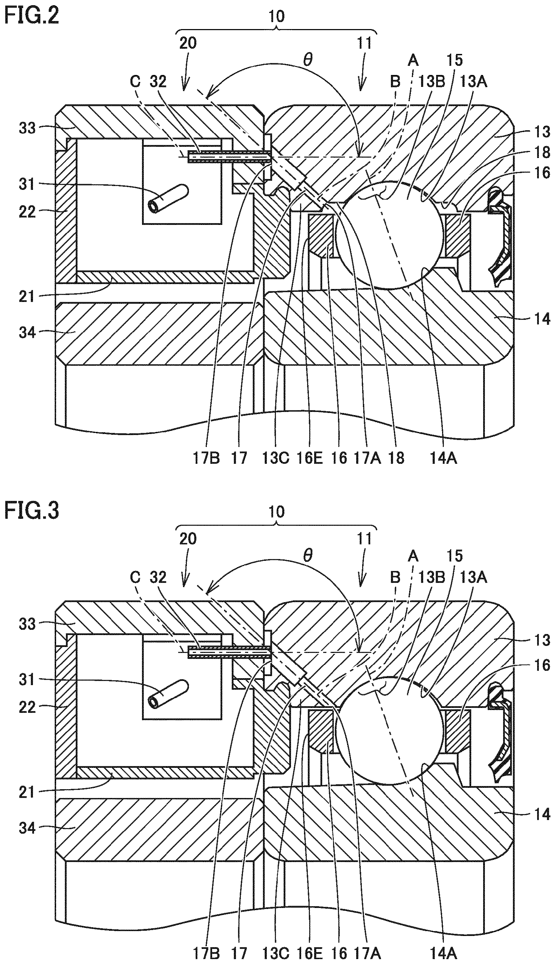

With reference to Fig. 1 and Fig. 2, a bearing apparatus 10 according to a first embodiment, which is not part of the claimed invention, will be described. Bearing apparatus 10 mainly includes an angular contact ball bearing 11 (see Fig. 2; hereinafter, simply referred to as "bearing 11"); bearing spacers 33, 34; and a lubricating oil supply unit 20 (see Fig. 2).

As shown in Fig. 2, angular contact ball bearing 11 mainly includes: an outer ring 13 serving as a fixed ring; an inner ring 14 serving as a rotation ring; a plurality of balls 15 each serving as a rolling element; and a cage 16. Outer ring 13 has a first raceway surface 13A. Inner ring 14 has a second raceway surface 14A. Each of the plurality of balls 15 is disposed between first raceway surface 13A and second raceway surface 14A to have a contact angle with respect to each of first raceway surface 13A and second raceway surface 14A. In the description below, a side at which a contact angle line A of each ball 15 (see Fig. 2) is inclined relative to the radial direction of bearing 11 will be referred to as a "rear side", and a side opposite thereto will be referred to as a "front side". In bearing 11, when inner ring 14 is rotated under application of radial load and thrust load, a rolling track 13B of each ball 15 is formed on a partial region of first raceway surface 13A. Rolling track 13B is formed on first raceway surface 13A at a region that can be in contact with a rolling contact surface on contact angle line A. An inclination of contact angle line A relative to the axial direction of bearing 11 (hereinafter, simply referred to as "axial direction") can be changed in accordance with use conditions such as preload and external load applied to bearing 11 and rotating speed. Therefore, rolling track 13B has a width in a direction along first raceway surface 13A in a cross section perpendicular to the circumferential direction of bearing 11. First raceway surface 13A has a region not provided with rolling track 13B. Rolling track 13B is formed on the entire circumference of first raceway surface 13A in the above-described circumferential direction.

Cage 16 holds the plurality of balls 15 at a certain interval in the circumferential direction of bearing 11. Cage 16 is disposed in a space formed between outer ring 13 and inner ring 14 so as to be separated from each of outer ring 13 and inner ring 14 in the radial direction. An end surface 16E of cage 16 in the above-described axial direction is formed at an axially inner side relative to the end surface (lateral surface) of outer ring 13 and the end surface (lateral surface) of inner ring 14 in the axial direction.

As shown in Fig. 2, outer ring 13 is provided with a recess 17 at least extending in the axial direction of the angular contact ball bearing. Recess 17 is formed as a through hole, for example. One end 17A of recess 17 in the axial direction faces the space formed between outer ring 13 and inner ring 14. One end 17A of recess 17 faces a clearance that is a portion of the space and that is formed between outer ring 13 and cage 16. Other end 17B of recess 17 in the axial direction is located at an outer side relative to the one end of recess 17 in the axial direction. Other end 17B of recess 17 is formed in the lateral surface of outer ring 13. Here, the lateral surface of outer ring 13 refers to an end surface of outer ring 13 in the axial direction, the end surface facing a below-described outer ring spacer 33. For example, a recess is formed in the lateral surface of outer ring 13, and other end 17B of recess 17 is formed in the lateral surface of outer ring 13 at a portion constituting the bottom of the foregoing recess formed in the lateral surface of outer ring 13. For example, a hole axis B of recess 17 is formed to extend along one direction crossing the axial direction. An angle θ of hole axis B of recess 17 relative to the axial direction is more than or equal to 100° and less than or equal to 170°, for example. Recess 17 includes: a first portion including one end 17A; and a second portion located at the outer ring spacer 33 side (upstream of a below-described supply path) relative to the first portion. The hole diameter of the first portion of recess 17 is smaller than the hole diameter of the second portion of recess 17. The respective hole diameters of the first portion and the second portion of recess 17 are set appropriately in accordance with a relation between an amount of discharge and a surface tension resulting from viscosity of base oil. In the present invention, the term "recess" refers to a structure depressed relative to a certain surface. An exemplary recess in the present invention is a through hole in which the recess extends to reach the other surface. Another exemplary recess in the present invention is a groove.

As shown in Fig. 2, in outer ring 13, a grease pocket 18 is formed adjacent to first raceway surface 13A at the rear side in the axial direction. Grease pocket 18 is formed as a groove portion in a shoulder portion 13C of outer ring 13 adjacent to first raceway surface 13A of outer ring 13 in the axial direction. Grease pocket 18 is formed along the circumferential direction of outer ring 13. An end portion of grease pocket 18 located at the inner side in the axial direction is connected to first raceway surface 13A. An end portion of grease pocket 18 located at the outer side in the axial direction is connected to the inner circumferential surface of shoulder portion 13C. The end portion of grease pocket 18 located at the outer side in the axial direction is formed at a position closer to first raceway surface 13A relative to end surface 16E of cage 16. One end 17A of recess 17 is formed inside grease pocket 18. One end 17A of recess 17 is formed in the end portion of grease pocket 18 located at the outer side in the axial direction, for example. In a cross section perpendicular to the circumferential direction, an outline of one end 17A is in the form of a curve, for example.

As shown in Fig. 2, in outer ring 13, a grease pocket 18 is further formed adjacent to first raceway surface 13A at the front side in the axial direction, for example. That is, two grease pockets 18 are formed adjacent to first raceway surface 13A so as to sandwich first raceway surface 13A in the axial direction. Grease pocket 18 located at the front side relative to first raceway surface 13A has the same configuration as that of grease pocket 18 located at the rear side relative to first raceway surface 13A.

Bearing spacers 33, 34 include an outer ring spacer 33 and an inner ring spacer 34. Outer ring spacer 33 is adjacent to outer ring 13 in the axial direction. The lateral surface of outer ring spacer 33 is in contact with the lateral surface of outer ring 13. Inner ring spacer 34 is adjacent to inner ring 14 in the axial direction. The lateral surface of inner ring spacer 34 is in contact with the lateral surface of inner ring 14. Desired grease is sealed in bearing 11 in advance.

Lubricating oil supply unit 20 includes: a supply portion configured to supply lubricating oil to the above-described space between outer ring 13 and inner ring 14; and a power generator configured to generate electric power for operating the supply portion. As shown in Fig. 1 and Fig. 2, lubricating oil supply unit 20, except for a portion of a below-described discharge tube 32, is disposed between outer ring spacer 33 and inner ring spacer 34. Between outer ring spacer 33 and inner ring spacer 34, an annular housing constituted of a housing main body 21 and a lid body 22 is formed. As shown in Fig. 1, lubricating oil supply unit 20, except for the portion of below-described discharge tube 32, is disposed inside housing main body 21 and lid body 22.

Lubricating oil supply unit 20 mainly includes power generator 25, a power supply circuit 26 including a charger, a control circuit 27, a drive circuit 28, a pump 29, and a lubricating oil tank 30, each of which is arranged in the circumferential direction. Control circuit 27, drive circuit 28, pump 29, lubricating oil tank 30, a suction tube 31, and discharge tube 32 constitutes the supply portion configured to supply the lubricating oil to the space between outer ring 13 and inner ring 14.

Power generator 25 is provided to generate electric power for operating the supply portion of lubricating oil supply unit 20 and supply the electric power to the supply portion. Examples of power generator 25 include a power generator configured to generate electric power through a Seebeck effect. Specifically, as shown in Fig. 1, power generator 25 includes: a heat conductor 23a connected to outer ring spacer 33; a heat conductor 23b disposed with a clearance 36 being interposed between heat conductor 23b and inner ring spacer 34; and a thermoelectric element 24 (element employing the Seebeck effect of a Peltier device) disposed to connect between heat conductor 23a and heat conductor 23b and closely fixed to heat conductors 23a, 23b.

Power generator 25 supplies electric power to lubricating oil supply unit 20 as follows. When a rolling bearing apparatus is used as bearing apparatus 10 as shown in Fig. 1, the temperatures of inner ring 14 and outer ring 13 are increased due to heat of friction with ball 15 (see Fig. 2). Normally, outer ring 13 is incorporated in the housing of the apparatus, so that the heat is radiated by heat conduction. Therefore, there occurs a temperature difference between inner ring 14 and outer ring 13 (the temperature of inner ring 14 is higher than the temperature of outer ring 13). Respective heats with the temperatures are conducted to heat conductors 23a, 23b. Heat conductors 23a, 23b are disposed to respectively extend through the inner circumferential surface and outer circumferential surface of housing main body 21. Therefore, there occurs a temperature difference between the both end surfaces of thermoelectric element 24 disposed between heat conductor 23a (heat sink) connected to outer ring 13 with outer ring spacer 33 interposed therebetween and heat conductor 23b located at the inner ring spacer 34 side (inner ring 14 side). Accordingly, in thermoelectric element 24, electric power can be generated through the Seebeck effect. Since such a power generator 25 is used, it is not necessary to supply electric power to lubricating oil supply unit 20 from outside. Hence, no electric wire needs to be attached to bearing apparatus 10 in order to supply electric power from outside. Power generator 25 is connected to power supply circuit 26.

Power supply circuit 26 is provided to store electric charges generated by power generator 25. Specifically, the charges are stored in a power storage device, such as a battery or a capacitor, included in power supply circuit 26. Power supply circuit 26 is connected to control circuit 27. Power supply circuit 26, which is electrically connected to drive circuit 28 and pump 29 via control circuit 27, is provided to supply electric power to these.

As described below, control circuit 27 can obtain data regarding a state of supply of the lubricating oil in lubricating oil supply unit 20, and can output the data to outside of control circuit 27. Control circuit 27 includes: a program storage device configured to store a control program; and an arithmetic device (microcomputer) connected to the program storage device and configured to execute the control program. Various parameters regarding a normal rotation operation of pump 29 can be set in advance by control circuit 27, such as a time of starting to supply the lubricating oil to bearing 11, a timing (interval) of supply thereof, a time of driving pump 29 to supply the lubricating oil, and an amount of supply of the lubricating oil. Control circuit 27 is connected to drive circuit 28.

Drive circuit 28 is a circuit for operating pump 29 such as a micro pump. Drive circuit 28 may include any sensor (such as a bearing temperature sensor, a bearing rotation sensor, a lubricating oil remaining amount sensor, a lubricating oil temperature sensor, or the like), for example. A signal from each of these sensors may be sent to an arithmetic device (microcomputer) of drive circuit 28 so as to automatically control pump 29 in accordance with the temperature and rotation state of bearing 11 to adjust the amount of supply of the lubricating oil.

Pump 29 is a rotary pump such as a trochoid pump, for example. Pump 29 is controlled by control circuit 27 via drive circuit 28. Suction tube 31 and discharge tube 32 (nozzle) are connected to pump 29. Suction tube 31 is connected to a pouch of lubricating oil tank 30. Discharge tube 32 is configured to supply the lubricating oil from pump 29 to the inside of bearing 11. As shown in Fig. 2, a discharge port (end portion opposite to a root portion connected to pump 29) of discharge tube 32 projects into the recess, which is formed in the lateral surface of outer ring 13, relative to the lateral surface of outer ring spacer 33 in the axial direction. The discharge port of discharge tube 32 is connected to other end 17B of recess 17 formed in the lateral surface of outer ring 13. Accordingly, the lubricating oil discharged from the discharge port of discharge tube 32 flows from other end 17B into recess 17, and flows out from one end 17A into grease pocket 18. It should be noted that the diameter of discharge tube 32 is appropriately set in accordance with the relation between the amount of discharge and the surface tension resulting from viscosity of the base oil.

Lubricating oil tank 30 retains the same type of lubricating oil as the base oil of the grease sealed in bearing 11. Power generator 25, power supply circuit 26, control circuit 27, drive circuit 28, pump 29, and lubricating oil tank 30 are disposed side by side in the circumferential direction in housing main body 21.

As shown in Fig. 2, housing main body 21 has an open side opposite to bearing 11 and therefore has a U-like cross sectional shape. Lid body 22 closes the opening of housing main body 21 and is configured to be detachable from housing main body 21. Each of housing main body 21 and lid body 22 may be composed of any material such as a resin material, more preferably, a thermoplastic resin. A tap hole 35 (see Fig. 1) is formed in housing main body 21, and lid body 22 of the housing may be fixed to tap hole 35 using a screw. Housing main body 21 is fixed to outer ring spacer 33. Clearance 36 is formed between housing main body 21 and inner ring spacer 34.

### <Function and Effect of Bearing Apparatus>

As shown in Fig. 1 and Fig. 2, bearing apparatus 10 includes: angular contact ball bearing 11; and control circuit 27, drive circuit 28, pump 29, lubricating oil tank 30, suction tube 31, and discharge tube 32, which serve as the supply portion configured to supply lubricating oil to the space between outer ring 13 and inner ring 14. Bearing 11 includes: outer ring 13 serving as a fixed ring and having first raceway surface 13A; inner ring 14 serving as a rotation ring, inner ring 14 being disposed to be separated from first raceway surface 13A in the radial direction of outer ring 13, inner ring 14 having second raceway surface 14A; and the plurality of balls 15 disposed between first raceway surface 13A and second raceway surface 14A to have an contact angle with respect to each of first raceway surface 13A and second raceway surface 14A. Outer ring 13 is provided with recess 17. One end 17A of recess 17 faces the above-described space, specifically, a first space portion of the above-described space located at the outer ring 13 side relative to the outer diameter surface of cage 16. Other end 17B of recess 17 is located at the outer side relative to one end 17A of recess 17 in the axial direction of bearing 11. The supply portion is provided to supply lubricating oil to the space, particularly, the first space portion via recess 17.

According to bearing apparatus 10 thus configured, even during high-speed rotation of inner ring 14 and cage 16, the above-described supply portion can supply lubricating oil to the space, particularly, the first space portion via recess 17. During the high-speed rotation of inner ring 14 and cage 16, an air curtain is caused at a second space portion located at the inner ring 14 side relative to the outer diameter surface of cage 16 and located at the outer side relative to end surface 16E of cage 16 in the axial direction. The air curtain hinders the lubricating oil from flowing in the second space portion in the axial direction. On the other hand, even during the high-speed rotation of inner ring 14 and cage 16, an air curtain that can hinder the lubricating oil from flowing in the axial direction is not caused at the first space portion. Hence, according to bearing apparatus 10, the lubricating oil can be efficiently supplied to the first space portion of the space via one end 17A of recess 17 formed in outer ring 13 without an influence of the air curtain. The lubricating oil supplied to the first space portion can spread on first raceway surface 13A connected to the first space portion without an influence of the air curtain. That is, according to bearing apparatus 10, the lubricating oil can be supplied to first raceway surface 13A via the first space portion without an influence of the air curtain. As a result, bearing apparatus 10 has a longer life than that of a bearing apparatus in which the lubricating oil is supplied to the raceway surface via the above-described second space portion.

As shown in Fig. 2, bearing apparatus 10 further includes cage 16 configured to hold the plurality of balls 15. One end 17A of recess 17 is formed at the inner side relative to end surface 16E of cage 16 in the axial direction. That is, one end 17A faces a minute space portion of the first space portion located at the inner side relative to end surface 16E of cage 16 in the axial direction. Hence, in bearing apparatus 10, the lubricating oil can be supplied to first raceway surface 13A via the minute space portion of the first space portion without an influence of the air curtain. Further, with such a configuration, a distance between one end 17A and first raceway surface 13A becomes shorter than that in the case where one end 17A is formed at the outer side relative to end surface 16E of cage 16 in the axial direction, i.e., in the case where one end 17A is formed at another space portion of the first space portion located at the outer side relative to the minute space portion in the axial direction. As a result, in bearing apparatus 10, the lubricating oil can be supplied from recess 17 to first raceway surface 13A more promptly. As a result, bearing apparatus 10 has a longer life than a bearing apparatus 10 in which one end 17A is formed in outer ring 13 at the outer side relative to end surface 16E in the axial direction.

As shown in Fig. 2, in bearing apparatus 10, one end 17A of recess 17 is formed in outer ring 13 at a region other than rolling track 13B of first raceway surface 13A. If one end 17A is formed in rolling track 13B, only a portion of the rolling contact surface of ball 15 is pressed against first raceway surface 13A to cause stress concentration, thus resulting in locally insufficient oil film, metal-to-metal contact, and excessive heat generation between outer ring 13 and ball 15. This may lead to surface damage or the like. On the other hand, in bearing apparatus 10, one end 17A is formed in outer ring 13 at the region other than rolling track 13B of first raceway surface 13A. Hence, bearing 11 is suppressed from being damaged at an early stage as compared with a bearing apparatus 10 in which one end 17A is formed in rolling track 13B.

As shown in Fig. 2, in bearing apparatus 10, outer ring 13 is provided with grease pocket 18 serving as a groove portion that is adjacent to first raceway surface 13A at the side (rear side) at which the contact angle is formed in the axial direction and that extends along the circumferential direction of outer ring 13. The grease can be sealed in grease pocket 18. Further, one end 17A of recess 17 is formed in grease pocket 18. That is, recess 17 is connected to grease pocket 18. Accordingly, the lubricating oil supplied into the first space portion of the space from the supply portion via one end 17A can be first discharged into grease pocket 18 and can be then temporarily retained in grease pocket 18. The lubricating oil in grease pocket 18 appropriately spreads on first raceway surface 13A including rolling track 13B. Accordingly, according to bearing apparatus 10, insufficiency of oil film can be prevented more securely, whereby bearing apparatus 10 has a longer life than that of a bearing apparatus 10 in which grease pocket 18 is not formed.

As shown in Fig. 2, in bearing apparatus 10, recess 17 is formed as a through hole formed in outer ring 13 serving as the fixed ring. One end 17A of recess 17 can be formed at a region close to rolling track 13B relative to end surface 16E of cage 16. According to such a bearing apparatus 10, since recess 17 is positioned relative to first raceway surface 13A and rolling track 13B, the lubricating oil can be more securely supplied to first raceway surface 13A via recess 17. Moreover, one end 17A of recess 17 is formed inside grease pocket 18 of outer ring 13, and other end 17B of recess 17 is formed in the lateral surface of outer ring 13. Hence, recess 17 does not cause the damage. Moreover, even when a distance between outer ring 13 and cage 16 in the radial direction of bearing 11 is shorter than the outer diameter of discharge tube 32 and it is difficult to directly insert discharge tube 32 into the above-described clearance between outer ring 13 and cage 16, the lubricating oil can be supplied into the clearance via recess 17 serving as a through hole.

As shown in Fig. 2, other end 17B of recess 17 is formed in the lateral surface of outer ring 13 serving as the fixed ring. Recess 17 is formed in the form of a straight line along a first direction. That is, hole axis B of recess 17 extends along the first direction. With this, recess 17 can be formed readily by perforation along the first direction, for example. The first direction has an angle θ of more than or equal to 100° and less than or equal to 170° relative to the axial direction. With this, recess 17 can be formed readily to extend from the lateral surface of outer ring 13 into grease pocket 18.

Bearing apparatus 10 further includes: outer ring spacer 33 serving as a fixed ring spacer and adjacent to outer ring 13 in the axial direction; inner ring spacer 34 adjacent to inner ring 14 in the axial direction and disposed to be separated from outer ring spacer 33 in the radial direction; and power generator 25 configured to generate electric power for operating the supply portion. Accordingly, bearing apparatus 10 does not need to externally receive electric power for operating the supply portion. The supply portion and power generator 25 constitute lubricating oil supply unit 20. Lubricating oil supply unit 20 is disposed mainly between outer ring spacer 33 and inner ring spacer 34. Accordingly, bearing apparatus 10 does not need to be provided with a space for placing lubricating oil supply unit 20 in bearing 11. Moreover, when outer ring spacer 33 and inner ring spacer 34 are configured as intermediate spacers, the lubricating oil can be supplied to two bearings 11 disposed to sandwich outer ring spacer 33 and inner ring spacer 34 in the axial direction.

Angular contact ball bearing 11 of bearing apparatus 10 includes outer ring 13 serving as the fixed ring and inner ring 14 serving as the rotation ring. Such a bearing apparatus 10 is suitable for a machine tool in which inner ring 14 is rotated at a high speed and preload and external load are applied to bearing 11, for example.

### <Modification>

It should be noted that in bearing apparatus 10, one end 17A of recess 17 may not be formed in grease pocket 18. One end 17A of recess 17 may be formed in outer ring 13 at an appropriate position in the axial direction. For example, one end 17A of recess 17 may be formed in outer ring 13 at the outer side relative to end surface 16E of cage 16 in the axial direction. Also in bearing apparatus 10 thus configured, the lubricating oil can be efficiently supplied from recess 17 to first raceway surface 13A via the first space portion without an influence of the air curtain. Moreover, bearing apparatus 10 has a longer life than that of a bearing apparatus in which the lubricating oil is supplied to the inner side relative to the outer diameter surface of the cage in the radial direction.

As shown in Fig. 3, grease pocket 18 may not be formed in outer ring 13 and one end 17A of recess 17 may be formed in shoulder portion 13C adjacent to first raceway surface 13A. Also in this way, the lubricating oil can be efficiently supplied from recess 17 to first raceway surface 13A via the first space portion without an influence of the air curtain. As a result, bearing apparatus 10 has a longer life than that of a bearing apparatus in which the lubricating oil is supplied to the inner side relative to the outer diameter surface of the cage in the radial direction.

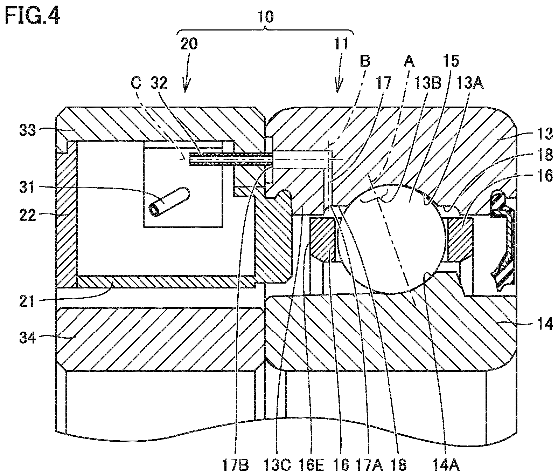

As shown in Fig. 4, recess 17 may be formed such that hole axis B is bent. For example, in the cross section perpendicular to the circumferential direction, recess 17 may be formed to have an L-like shape. Recess 17 may be constituted of: a portion having one end 17A and having a hole axis extending along the radial direction; and a portion having other end 17B and having a hole axis extending along the axial direction. Moreover, in the cross section perpendicular to the circumferential direction, recess 17 may be formed to have a U-like shape. In this case, other end 17B of recess 17 may not be formed in the lateral surface of outer ring 13. Other end 17B may be formed in the inner circumferential surface of outer ring 13 at the outer side relative to end surface 16E of cage 16 in the axial direction, for example. Discharge tube 32 may be formed such that discharge port 32A is connected to other end 17B.

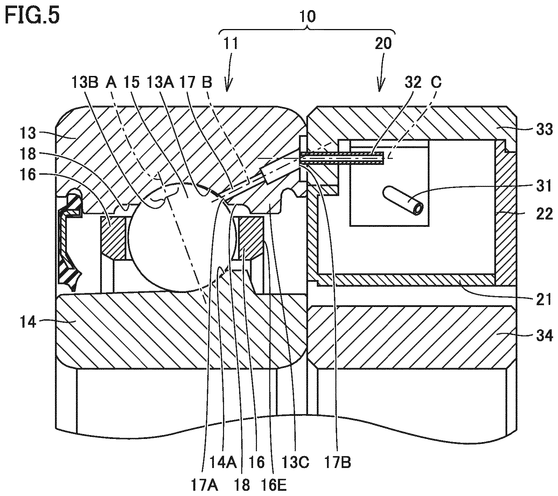

As shown in Fig. 5, one end 17A of recess 17 may be formed in first raceway surface 13A located at the side (front side), at which the above-described contact angle is not formed, relative to rolling track 13B in the axial direction. Also in this way, the lubricating oil can be supplied efficiently from recess 17 to first raceway surface 13A via the first space portion without an influence of the air curtain. Moreover, since one end 17A is formed in first raceway surface 13A at the region other than rolling track 13B, damage caused by recess 17 is prevented in bearing apparatus 10. It should be noted that in this case, other end 17B of recess 17 may be formed in the end surface of outer ring 13 located at the front side in the axial direction. In this way, an extending distance of recess 17 from other end 17B to one end 17A can be shorter than that in the case where one end 17A and other end 17B are formed to sandwich contact angle line A in the axial direction. Accordingly, in bearing apparatus 10, the lubricating oil can be supplied from recess 17 to first raceway surface 13A promptly.

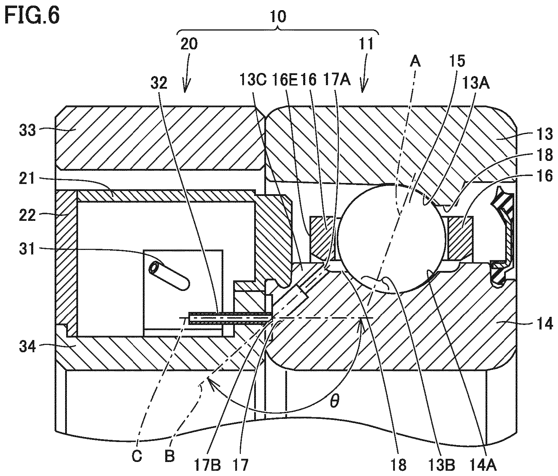

As shown in Fig. 6, angular contact ball bearing 11 of bearing apparatus 10 may include inner ring 14 serving as the fixed ring and outer ring 13 serving as the rotation ring. In this case, recess 17 is formed in inner ring 14 serving as the fixed ring. In such a bearing 11, during high-speed rotation of outer ring 13 and cage 16, an air curtain can be caused at the outer side relative to the inner diameter surface of cage 16 facing inner ring 14 serving as the fixed ring in the radial direction and at the outer side relative to end surface 16E of cage 16 in the axial direction. On the other hand, an air curtain that can hinder the lubricating oil from flowing at least in the axial direction is not caused at a third space portion of the space located at the inner side in the radial direction relative to the inner diameter surface of cage 16 facing inner ring 14 serving as the fixed ring. Therefore, according to bearing apparatus 10 in which the lubricating oil is supplied to the third space portion via one end 17A of recess 17 formed in inner ring 14, hindrance of supply of the lubricating oil by the air curtain is prevented. The lubricating oil supplied to the third space portion can spread on first raceway surface 13A connected to the third space portion. As a result, bearing apparatus 10 has a longer life than a bearing apparatus in which the lubricating oil is supplied between cage 16 and outer ring 13 serving as the rotation ring in the radial direction. It should be noted that each of Fig. 3 to Fig. 6 shows a cross section perpendicular to the circumferential direction of bearing apparatus 10 as with Fig. 2.

### (Second Embodiment)

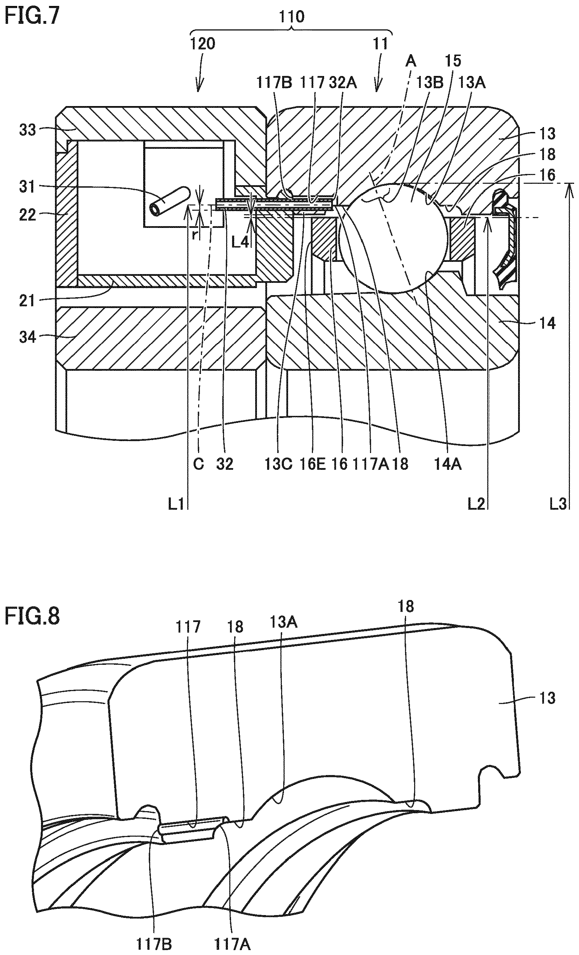

With reference to Fig. 7 and Fig. 8, a bearing apparatus 110 according to a second embodiment will be described. Although bearing apparatus 110 includes basically the same configuration as that of bearing apparatus 10 according to the first embodiment, bearing apparatus 110 is different therefrom in that discharge port 32A of discharge tube 32 serving as a nozzle is disposed in bearing 11. Although a lubricating oil supply unit 120 of bearing apparatus 110 includes basically the same configuration as that of lubricating oil supply unit 20 according to the first embodiment, lubricating oil supply unit 120 is different therefrom in that discharge port 32A of discharge tube 32 is disposed in the above-described space of bearing 11. It should be noted that Fig. 7 shows a cross section perpendicular to the circumferential direction of bearing apparatus 110.

That is, as shown in Fig. 7 and Fig. 8, bearing apparatus 110 includes angular contact ball bearing 11, outer ring spacer 33, inner ring spacer 34, and the above-described supply portion. Angular contact ball bearing 11 includes: outer ring 13 serving as a fixed ring and having first raceway surface 13A; inner ring 14 serving as a rotation ring, inner ring 14 being disposed to be separated from first raceway surface 13A in the radial direction of outer ring 13, inner ring 14 having second raceway surface 14A; a plurality of balls 15 disposed between first raceway surface 13A and second raceway surface 14A to have an contact angle with respect to each of first raceway surface 13A and second raceway surface 14A; and cage 16 configured to hold the plurality of balls 15. Outer ring spacer 33 is adjacent to outer ring 13 in the axial direction of angular contact ball bearing 11. Inner ring spacer 34 is adjacent to inner ring 14 in the axial direction and is disposed to be separated from outer ring spacer 33 in the radial direction. The supply portion is disposed between outer ring spacer 33 and inner ring spacer 34. The supply portion supplies the lubricating oil to the clearance between cage 16 and outer ring 13, i.e., the above-described first space portion. The supply portion includes discharge tube 32 serving as a nozzle. Discharge tube 32 has discharge port 32A disposed in the clearance, discharge port 32A being configured to discharge the lubricating oil. That is, discharge port 32A is formed at the inner side relative to end surface 16E of cage 16 in the axial direction.

As shown in Fig. 7 and Fig. 8, outer ring 13 in bearing apparatus 110 is provided with a nozzle insertion recess 117 in which a portion of discharge tube 32 is inserted. Nozzle insertion recess 117 includes basically the same configuration as that of recess 17 in bearing apparatus 10, and is different therefrom in that a portion of discharge tube 32 is inserted to nozzle insertion recess 117. One end 117A of nozzle insertion recess 117 in the axial direction faces the clearance between outer ring 13 and cage 16, i.e., the above-described minute space portion of the first space portion. Other end 117B of nozzle insertion recess 117 in the axial direction is located at the outer side relative to one end 117A in the axial direction. Other end 117B of nozzle insertion recess 117 is formed in the end surface of shoulder portion 13C located at the outer side relative to one end 117A in the axial direction, for example. Nozzle insertion recess 117 is formed in shoulder portion 13C of outer ring 13 as a through hole. The hole axis of nozzle insertion recess 117 is along the axial direction, for example. The hole diameter of nozzle insertion recess 117 is longer than the outer diameter of discharge tube 32.

As shown in Fig. 7 and Fig. 8, outer ring 13 is provided with grease pocket 18 serving as a groove portion that is adjacent to first raceway surface 13A at the side at which the contact angle is formed in the axial direction and that is along the circumferential direction of outer ring 13. Discharge port 32A is disposed in grease pocket 18.

As shown in Fig. 7 and Fig. 8, bearing 11 includes outer ring 13 serving as the fixed ring and inner ring 14 serving as the rotation ring.

As shown in Fig. 7 and Fig. 8, center axis C of discharge tube 32 is along the hole axis of nozzle insertion recess 117, and is along the axial direction, for example. Discharge port 32A of discharge tube 32 is disposed at a position close to one end 117A relative to other end 117B of nozzle insertion recess 117, for example. That is, discharge port 32A is formed at the position close to first raceway surface 13A relative to end surface 16E of cage 16. A portion of discharge port 32A located at the cage 16 side projects into grease pocket 18, for example. That is, discharge port 32A is disposed in the minute space portion of the above-described first space portion.

Hence, according to bearing apparatus 110, the lubricating oil discharged from discharge port 32A can be supplied from the inside of grease pocket 18 to first raceway surface 13 A without an influence of the air curtain. Hence, bearing apparatus 110 can exhibit the same effect as that of bearing apparatus 10.

As shown in Fig. 7, the following relation is satisfied in bearing apparatus 110: L2+r+L4<L1<L3, where L1 represents a distance between the center of discharge port 32A and the center of bearing 11 in the radial direction, L2 represents 1/2 (half) of the outer diameter of cage 16, L3 represents 1/2 (half) of the diameter of the bottom of the groove of first raceway surface 13A of outer ring 13, r represents 1/2 (half) of the outer diameter of discharge port 32A, and L4 represents a distance between outer ring 13 and the outer diameter surface of cage 16 in the radial direction. Distance L1 corresponds to the radius of a circle that centers on the center axis of bearing 11 and that passes through the center of discharge port 32A. Distance L4 corresponds to a distance between the inner circumferential surface of shoulder portion 13C of outer ring 13 and the outer diameter surface of cage 16 in the radial direction. By disposing discharge port 32A to satisfy the above-described relation, the maximum distance between discharge port 32A and first raceway surface 13A in the radial direction, i.e., a difference between distance L1 and distance L3 becomes shorter than that in the case where discharge port 32A is not disposed to satisfy the above-described relation. Accordingly, the lubricating oil discharged from discharge port 32A can be more effectively supplied to first raceway surface 13A via the first space portion.

### (Third Embodiment)

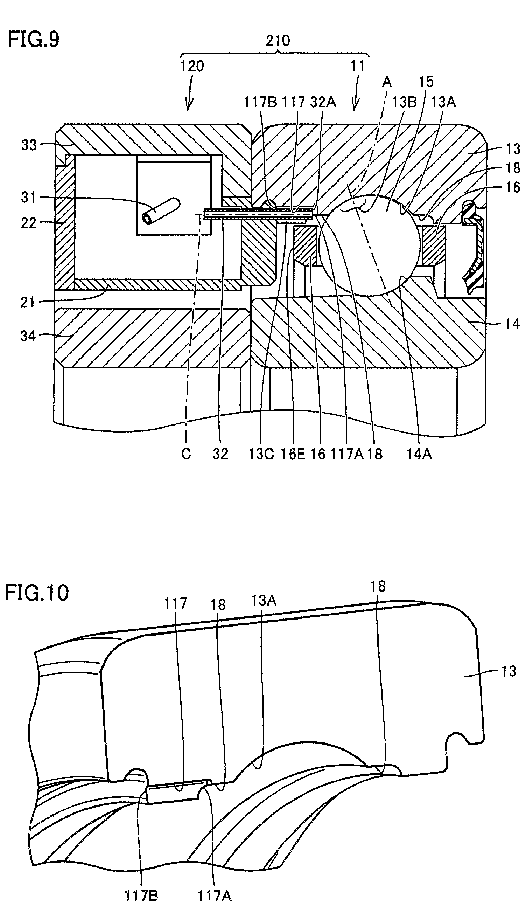

Next, with reference to Fig. 9 and Fig. 10, a bearing apparatus 210 according to a third embodiment will be described. Bearing apparatus 210 includes basically the same configuration as that of bearing apparatus 110 according to the second embodiment, and is different therefrom in that nozzle insertion recess 117 is formed as a groove, rather than a through hole. Nozzle insertion recess 117 is formed as a groove in outer ring 13, which serves as the fixed ring, at its inner circumferential surface facing inner ring 14 serving as the rotation ring. It should be noted that Fig. 9 shows a cross section perpendicular to the circumferential direction of bearing apparatus 210.

As shown in Fig. 9 and Fig. 10, nozzle insertion recess 117 is a groove formed to be recessed relative to the inner circumferential surface of shoulder portion 13C of outer ring 13. Nozzle insertion recess 117 is formed to extend along the axial direction. In the cross section perpendicular to the axial direction, the inner surface of nozzle insertion recess 117 forms a semicircular arc, for example. One end 117A of nozzle insertion recess 117 is formed inside grease pocket 18. That is, one end 117A is formed at the position close to first raceway surface 13A relative to end surface 16E of cage 16, and faces the minute space portion of the first space portion. Nozzle insertion recess 117 is connected to grease pocket 18. Other end 17B of nozzle insertion recess 117 is formed in the end surface of shoulder portion 13C located at the outer side relative to one end 117A in the axial direction, for example. The hole axis of nozzle insertion recess 117 is along the axial direction, for example. Nozzle insertion recess 117 is provided to accommodate at least a portion of discharge tube 32. For example, nozzle insertion recess 117 includes discharge port 32A of discharge tube 32 and is provided to accommodate a portion thereof located at the outer ring 13 side in the radial direction.

As shown in Fig. 9 and Fig. 10, center axis C of discharge tube 32 is along the hole axis of nozzle insertion recess 117, and is along the axial direction, for example. Discharge port 32A of discharge tube 32 is disposed at a position close to one end 117A relative to other end 117B of nozzle insertion recess 117, for example. A portion of discharge port 32A located at the cage 16 side projects into grease pocket 18, for example. That is, discharge port 32A is disposed in the minute space portion of the above-described first space portion.

Accordingly, according to bearing apparatus 110, the lubricating oil discharged from discharge port 32A can be supplied to first raceway surface 13A including rolling track 13B without an influence of the air curtain. Accordingly, bearing apparatus 210 can exhibit the same effect as those of bearing apparatuses 10, 110.

### <Modification>

Each of bearing apparatuses 110, 210 can be modified within the scope of the appended claims.

The hole axis of nozzle insertion recess 117 may be formed to be inclined relative to the axial direction.

### INDUSTRIAL APPLICABILITY

The present invention is applied particularly advantageously to a bearing apparatus including an angular contact ball bearing having a rotation ring configured to be rotated at a high speed.

### REFERENCE SIGNS LIST

10, 110, 210: bearing apparatus; 11: angular contact ball bearing; 13: outer ring; 13A: first raceway surface; 13B: rolling track; 13C: shoulder portion; 14: inner ring; 14A: second raceway surface; 15: ball; 16: cage; 16E: end surface; 17: recess; 17A: one end; 17B: other end; 18: grease pocket; 20, 120: lubricating oil supply unit; 21: housing main body; 22: lid body; 23a, 23b: heat conductor; 24: thermoelectric element; 25: power generator; 26: power supply circuit; 27: control circuit; 28: drive circuit; 29: pump; 30: lubricating oil tank; 31: suction tube; 32: discharge tube; 32A: discharge port; 33: outer ring spacer; 34: inner ring spacer; 35: tap hole; 36: clearance; 117: nozzle insertion recess; 117A: one end; 117B: other end.

## Claims

1. A bearing apparatus (110, 210) comprising:
an angular contact ball bearing (11) including a fixed ring (13), a rotation ring (14), a plurality of rolling elements (15), and a cage (16), the fixed ring (13) having a first raceway surface (13A), the rotation ring (14) being disposed to be separated from the first raceway surface (13A) in a radial direction of the fixed ring (13), the rotation ring (14) having a second raceway surface (14A), each of the plurality of rolling elements (15) being disposed between the first raceway surface (13A) and the second raceway surface (14A) to have an contact angle with respect to each of the first raceway surface (13A) and the second raceway surface (14A), the cage (16) being configured to hold the plurality of rolling elements (15);
a fixed ring spacer (33) adjacent to the fixed ring (13) in an axial direction of the angular contact ball bearing (11);
a rotation ring spacer (34) adjacent to the rotation ring (14) in the axial direction, the rotation ring spacer (34) being disposed to be separated from the fixed ring spacer (33) in the radial direction; and
a supply portion (27, 28, 29, 30, 31, 32) disposed between the fixed ring spacer (33) and the rotation ring spacer (34), the supply portion (27, 28, 29, 30, 31, 32) being configured to supply lubricating oil to a clearance between the cage (16) and the fixed ring (13), wherein
the supply portion (27, 28, 29, 30, 31, 32) includes a nozzle (32) having a discharge port (32A) disposed in the clearance, the discharge port (32A) being configured to discharge the lubricating oil,
the fixed ring (13) is provided with a groove portion (18) formed adjacent to the first raceway surface (13A),
the groove portion (18) being along a circumferential direction of the fixed ring (13), wherein
the one end (117A) of nozzle insertion recess (117) is formed inside the groove portion (18), **characterized in that** the groove portion (18) is formed at a side, at which the contact angle is formed, in the axial direction, and **in that**
the discharge port (32A) is disposed inside the groove portion (18).

2. The bearing apparatus (110, 210) according to claim 1, wherein
the fixed ring (13) is provided with a nozzle insertion recess (117) in which a portion of the nozzle (32) is insertable,
the nozzle insertion recess (117) extends at least in the axial direction,
one end (117A) of the nozzle insertion recess (117) in the axial direction faces the clearance,
the other end of the nozzle insertion recess (117) in the axial direction is located at an outer side relative to the one end in the axial direction, and
the portion of the nozzle (32) is disposed in the nozzle insertion recess (117).

3. The bearing apparatus (110) according to claim 2, wherein the nozzle insertion recess (117) is formed as a through hole.

4. The bearing apparatus (210) according to claim 2, wherein the nozzle insertion recess (117) is formed as a groove in the fixed ring (13) at a circumferential surface facing the rotation ring (14).

5. The bearing apparatus (110, 210) according to any one of claims 1 to 4, wherein the fixed ring (13) is an outer ring and the rotation ring (14) is an inner ring.

6. The bearing apparatus (110, 210) according to claim 5, wherein the following relation is satisfied: L2+r+L4<L1<L3, where L1 represents a distance between a center of the discharge port (32A) and a center of the angular contact ball bearing (11) in the radial direction, L2 represents a half of an outer diameter of the cage (16), L3 represents a half of a diameter of a bottom of a groove of the first raceway surface (13A) of the fixed ring (13), r represents a half of an outer diameter of the discharge port (32A), and L4 represents a distance between the fixed ring (13) and an outer diameter surface of the cage (16) in the radial direction.

7. The bearing apparatus (110, 210) according to any one of claims 1 to 6, further comprising a power generator (25) configured to generate electric power for operating the supply portion (27, 28, 29, 30, 31, 32), wherein
the power generator (25) is disposed between the fixed ring spacer (33) and the rotation ring spacer (34).

## Patentansprüche

1. Lagervorrichtung (110, 210), umfassend:
ein Schrägkugellager (11), das einen feststehenden Ring (13), einen Drehring (14), mehrere Wälzelemente (15) und einen Käfig (16) aufweist, wobei der feststehende Ring (13) eine erste Lauffläche (13A) aufweist, wobei der Drehring (14) so angeordnet ist, dass er von der ersten Lauffläche (13A) in einer radialen Richtung des feststehenden Rings (13) getrennt ist, wobei der Drehring (14) eine zweite Lauffläche (14A) aufweist, wobei jedes der mehreren Wälzelemente (15) zwischen der ersten Lauffläche (13A) und der zweiten Lauffläche (14A) so angeordnet ist, dass es einen Kontaktwinkel in Bezug auf jede von der ersten Lauffläche (13A) und der zweiten Lauffläche (14A) aufweist, wobei der Käfig (16) eingerichtet ist, um die mehreren Wälzelemente (15) zu halten;
einen Abstandshalter (33) für den feststehenden Ring benachbart zu dem feststehenden Ring (13) in einer axialen Richtung des Schrägkugellagers (11);
einen Abstandshalter (34) für den Drehring benachbart zu dem Drehring (14) in der axialen Richtung, wobei der Abstandshalter (34) für den Drehring so angeordnet ist, dass er von dem Abstandshalter (33) für den feststehenden Ring in der radialen Richtung getrennt ist; und
einen Zufuhrabschnitt (27, 28, 29, 30, 31, 32), der zwischen dem Abstandshalter (33) für den feststehenden Ring und dem Abstandshalter (34) für den Drehring angeordnet ist, wobei der Zufuhrabschnitt (27, 28, 29, 30, 31, 32) eingerichtet ist, um Schmieröl in einen Zwischenraum zwischen dem Käfig (16) und dem feststehenden Ring (13) zu leiten, wobei der Zufuhrabschnitt (27, 28, 29, 30, 31, 32) eine Düse (32) aufweist, die eine Auslassöffnung (32A) aufweist, die in dem Zwischenraum angeordnet ist, wobei die Auslassöffnung (32A) eingerichtet ist, um das Schmieröl auszulassen,
der feststehende Ring (13) mit einem Nutabschnitt (18) vorgesehen ist, der benachbart zu der ersten Lauffläche (13A) gebildet ist, wobei sich der Nutabschnitt (18) entlang einer Umfangsrichtung des feststehenden Rings (13) befindet, wobei
das eine Ende (117A) einer Düseneinsetzvertiefung (117) im Inneren des Nutabschnitts (18) gebildet ist,
**dadurch gekennzeichnet, dass**
der Nutabschnitt (18), in einer axialen Richtung, an einer Seite gebildet ist, an welcher der Kontaktwinkel gebildet ist, und darin, dass die Auslassöffnung (32A) im Inneren des Nutabschnitts (18) angeordnet ist.

2. Lagervorrichtung (110, 210) nach Anspruch 1, wobei
der feststehende Ring (13) mit einer Düseneinsetzvertiefung (117) vorgesehen ist, in die ein Abschnitt der Düse (32) einsetzbar ist,
sich die Düseneinsetzvertiefung (117) mindestens in der axialen Richtung erstreckt,
ein Ende (117A) der Düseneinsetzvertiefung (117) in der axialen Richtung dem Zwischenraum zugewandt ist,
sich das andere Ende der Düseneinsetzvertiefung (117) in der axialen Richtung an einer Außenseite relativ zu dem einen Ende in der axialen Richtung befindet und
der Abschnitt der Düse (32) in der Düseneinsetzvertiefung (117) angeordnet ist.

3. Lagervorrichtung (110) nach Anspruch 2, wobei die Düseneinsetzvertiefung (117) als Durchgangsloch gebildet ist.

4. Lagervorrichtung (210) nach Anspruch 2, wobei die Düseneinsetzvertiefung (117) als Nut in dem feststehenden Ring (13) an einer dem Drehring (14) zugewandten Umfangsfläche gebildet ist.

5. Lagervorrichtung (110, 210) nach einem der Ansprüche 1 bis 4, wobei der feststehende Ring (13) ein äußerer Ring ist und der Drehring (14) ein innerer Ring ist.

6. Lagervorrichtung (110, 210) nach Anspruch 5, wobei die folgende Beziehung erfüllt ist: L2+r+L4<L1<L3, wobei L1 einen Abstand zwischen einer Mitte der Auslassöffnung (32A) und einer Mitte des Schrägkugellagers (11) in der radialen Richtung darstellt, L2 eine Hälfte eines Außendurchmessers des Käfigs (16) darstellt, L3 eine Hälfte eines Durchmessers eines Bodens einer Nut der ersten Lauffläche (13A) des feststehenden Rings (13) darstellt, r eine Hälfte eines Außendurchmessers der Auslassöffnung (32A) darstellt und L4 einen Abstand zwischen dem feststehenden Ring (13) und einer Außendurchmesserfläche des Käfigs (16) in der radialen Richtung darstellt.

7. Lagervorrichtung (110, 210) nach einem der Ansprüche 1 bis 6, ferner umfassend einen Energieerzeuger (25), der eingerichtet ist, um elektrische Energie zu erzeugen, um den Zufuhrabschnitt (27, 28,29, 30, 31, 32) zu betreiben, wobei
der Energieerzeuger (25) zwischen dem Abstandshalter (33) für den feststehenden Ring und dem Abstandshalter (34) für den Drehring angeordnet ist.

## Revendications

1. Dispositif de palier (110, 210) comprenant :
un roulement à billes à contact angulaire (11) comprenant une bague fixe (13), une bague de rotation (14), une pluralité d'éléments de roulement (15), et une cage (16), la bague fixe (13) ayant une première surface de roulement (13A), la bague de rotation (14) étant disposée pour être séparée de la première surface de roulement (13A) dans une direction radiale de la bague fixe (13), la bague de rotation (14) ayant une seconde surface de roulement (14A), chacun de la pluralité d'éléments de roulement (15) étant disposé entre la première surface de roulement (13A) et la seconde surface de roulement (14A) pour avoir un angle de contact par rapport à chacune de la première surface de roulement (13A) et de la seconde surface de roulement (14A), la cage (16) étant configurée pour maintenir la pluralité d'éléments de roulement (15) ;
une entretoise de bague fixe (33) adjacente à la bague fixe (13) dans une direction axiale du roulement à billes à contact angulaire (11) ;
une entretoise de bague de rotation (34) adjacente à la bague de rotation (14) dans la direction axiale, l'entretoise de bague de rotation (34) étant disposée pour être séparée de l'entretoise de bague fixe (33) dans la direction radiale ; et
une partie d'alimentation (27, 28, 29, 30, 31, 32) disposée entre l'entretoise de bague fixe (33) et l'entretoise de bague de rotation (34), la partie d'alimentation (27, 28, 29, 30, 31, 32) étant configurée pour fournir de l'huile lubrifiante à un jeu entre la cage (16) et la bague fixe (13), dans lequel
la partie d'alimentation (27, 28, 29, 30, 31, 32) comprend une buse (32) ayant un orifice de décharge (32A) disposé dans le jeu, l'orifice de décharge (32A) étant configuré pour décharger l'huile lubrifiante,
la bague fixe (13) est munie d'une partie de rainure (18) formée de manière adjacente à la première surface de roulement (13A),
la partie de rainure (18) étant le long d'une direction circonférentielle de la bague fixe (13), dans lequel
l'une des extrémités (117A) d'un évidement d'insertion de buse (117) est formée à l'intérieur de la partie de rainure (18),
**caractérisé en ce**
**que** la partie de rainure (18) est formée sur un côté, au niveau duquel l'angle de contact est formé, dans la direction axiale, et en ce que l'orifice de décharge (32A) est disposé à l'intérieur de la partie de rainure (18).

2. Dispositif de palier (110, 210) selon la revendication 1, dans lequel
la bague fixe (13) est pourvue d'un évidement d'insertion de buse (117) dans lequel une partie de la buse (32) peut être insérée,
l'évidement d'insertion de buse (117) s'étend au moins dans la direction axiale,
une extrémité (117A) de l'évidement d'insertion de buse (117) dans la direction axiale fait face au jeu,
l'autre extrémité de l'évidement d'insertion de buse (117) dans la direction axiale est située sur un côté extérieur par rapport à la première extrémité dans la direction axiale, et
la partie de buse (32) est disposée dans l'évidement d'insertion de buse (117).

3. Dispositif de palier (110) selon la revendication 2, dans lequel l'évidement d'insertion de buse (117) est formé comme un trou traversant.

4. Dispositif de palier (210) selon la revendication 2, dans lequel l'évidement d'insertion de buse (117) est formé comme une rainure dans la bague fixe (13) au niveau d'une surface circonférentielle faisant face à la bague de rotation (14).

5. Dispositif de palier (110, 210) selon l'une quelconque des revendications 1 à 4, dans lequel la bague fixe (13) est une bague extérieure et la bague de rotation (14) est une bague intérieure.

6. Dispositif de palier (110, 210) selon la revendication 5, dans lequel la relation suivante est satisfaite : L2+r+L4<L1<L3, où L1 représente une distance entre un centre de l'orifice de décharge (32A) et un centre du roulement à billes à contact angulaire (11) dans la direction radiale, L2 représente une moitié d'un diamètre extérieur de la cage (16), L3 représente une moitié d'un diamètre d'un fond d'une rainure de la première surface de roulement (13A) de la bague fixe (13), r représente une moitié d'un diamètre extérieur de l'orifice de décharge (32A), et L4 représente une distance entre la bague fixe (13) et une surface de diamètre extérieur de la cage (16) dans la direction radiale.

7. Dispositif de palier (110, 210) selon l'une quelconque des revendications 1 à 6, comprenant en outre un générateur d'énergie (25) configuré pour générer de l'énergie électrique pour faire fonctionner la partie d'alimentation (27, 28, 29, 30, 31, 32), dans lequel le générateur d'énergie (25) est disposé entre l'entretoise de bague fixe (33) et l'entretoise de bague de rotation (34).
